# EUROPÄISCHE PATENTSCHRIFT

(11) **EP 1 484 237 B1**
(45) Veröffentlichungstag und Bekanntmachung des Hinweises auf die Patenterteilung: **14.02.2007**
(21) Anmeldenummer: 04008192.9
(22) Anmeldetag: 05.04.2004
(51) Int. Cl.: B62D 35/00, B62D 25/08

(54) **Luftleiteinrichtung für ein Kraftfahrzeug**
Spoiler for a vehicle
Déflecteur pour véhicule automobile

(30) Priorität: 06.06.2003 DE 10325654
(43) Veröffentlichungstag der Anmeldung: 08.12.2004
(73) Patentinhaber: Dr.Ing. h.c.F. Porsche Aktiengesellschaft, 70435 Stuttgart (DE)
(72) Erfinder: Jungert, Dieter, 71287 Weissach (DE)

(56) Entgegenhaltungen:
- WO-A-02/051688
- DE-A- 10 160 748

## Beschreibung

Bei der Erfindung wird ausgegangen von einer Luftleiteinrichtung für ein Kraftfahrzeug, gemäß Oberbegriff des Anspruchs 1.

Aus der nachveröffentlichten DE 101 60 748. 2 geht eine gattungsbildende Luftleiteinrichtung hervor. Sie besitzt ein Betätigungselement und ein Strömungsleitelement, welches sich ganz oder teilweise über die Fahrzeugbreite erstreckt. Das Strömungsleitelement ist mittels des Betätigungselements aus einer eingefahrenen Ruhestellung in eine ausgefahrene Betriebsstellung verlagerbar, wobei das Strömungsleitelement aus einem elastischen und dehnbaren Material hergestellt ist sowie im Bereich seines freien Endes einen in Fahrzeugquerrichtung verlaufenden Kanal aufweist, in dem ein biegeelastisches Element verschieblich angeordnet ist.

Die Patentschrift WO 02/051688 A offenbart ein Luftleitelement für ein Kraftfahrzeug, mit einem Betätigungselement und einem ganz oder teilweise über die Fahrzeugbreite verlaufenden Strömungsleitelement, mit welchem Betätigungselement das Strömungsleitelement aus einer eingefahrenen Ruhestellung in eine ausgefahrene Betriebesstellung verlagerbar ist, und welches Strömungsleitelement ein elastisches und dehnbares Material umfasst.

Aufgabe der Erfindung ist es, eine Luftleiteinrichtung der eingangs genannten Art hinsichtlich ihrer Funktion zu optimieren.

Gelöst wird diese Aufgabe mit einer Luftleiteinrichtung, die die in Anspruch 1 genannten Merkmale zeigt. Weitere, die Erfindung ausgestaltende Merkmale sind in den Unteransprüchen angegeben.

Die mit der Erfindung hauptsächlich erzielten Vorteile sind darin zu sehen, dass das biegeelastische Element mit geringer Reibung in dem Kanal bei der Verlagerung des Strömungsleitelements aus der Ruhestellung in die Betriebsstellung und umgekehrt verschiebbar geführt ist. Außerdem bildet das Führungsmittel neben der Verschiebeführung noch eine Verstärkung in dem Strömungsleitelement und bietet demgemäß eine Schutzfunktion gegen Versagen, beispielweise ein Einreissen des Strömungsleitelements vom freien Ende her.

In besonders bevorzugter Ausführungsform gemäß Anspruch 2 ist das Führungsmittel biegeelastisch ausgeführt, wodurch Rückstellkräfte aufgebaut werden, wenn das Strömungsleitelement von der Ruhestellung in die Betriebsstellung bewegt wird.

Nach einer Weiterbildung mit den in Anspruch 3 genannten Merkmalen kann ein einfach herstellbares biegeelastisches Führungsmittel bereit gestellt werden, welches außerdem die Verschiebeführung für das biegeelastische Element übernimmt.

Gemäß Anspruch 5 kann das Führungsmittel nach der Herstellung des Strömungsleitelements in den Kanal eingesetzt werden oder aber - entsprechend Anspruch 6 - bei der Herstellung des Strömungsleitelements mit in das Strömungsleitelement eingebracht, beispielsweise eingespritzt oder eingegossen werden.

Bevorzugt wird eine Ausführungsform mit den in Anspruch 7 genannten Merkmalen, bei dem das biegeelastische Element als Stab, insbesondere faserverstärkter Kunststoffstab, ausgeführt ist, der ohne großen Aufwand in den Kanal eingebracht werden kann. Der biegeelastische Stab stützt sich dann an dem Führungsmittel ab, wodurch die Reibung zwischen dem Stab und der Wandung des Kanals vermieden wird. Das biegeelastische Element könnte ggf. aus einem metallischen Werkstoff hergestellt sein.

Die Erfindung wird nachfolgend anhand von Ausführungsbeispielen mit Bezug auf die Zeichnung näher erläutert.

Es zeigen:
- Fig. 1: in perspektivischer Ansicht ausschnittweise ein Kraftfahrzeug mit einer Luftleiteinrichtung,
- Fig. 2: die Luftleiteinrichtung nach Fig. 1 in Explosionsdarstellung und
- Fig. 3: einen Schnitt durch die Luftleiteinrichtung entlang der Linie III - III in Fig. 1.

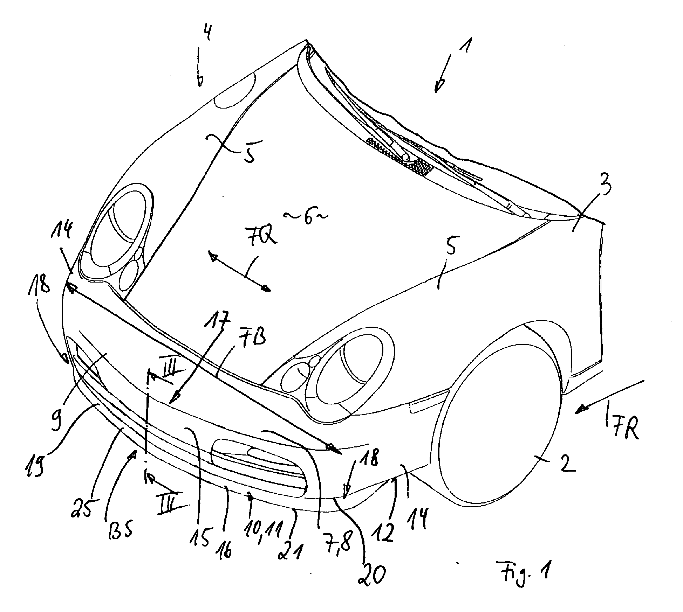

Fig. 1 zeigt teilweise ein Kraftfahrzeug 1, von dessen von Rädern 2 getragenen Aufbau 3 lediglich eine Frontpartie 4 zu sehen ist. Die Frontpartie 4 umfasst Teile der Fahrzeugaußenhaut bildende seitliche Kotflügel 5, eine dazwischen angeordnete Haube 6 sowie ein der Haube 6 und den Kotflügeln 5 vorgelagertes Bugteil 7, welches ein Verkleidungsteil 8 für einen dahinter anordenbaren Stoßfänger (nicht dargestellt) darstellen kann. Mithin bildet das Bugteil 7 das vordere Ende 9 des Kraftfahrzeugs 1 bzw. der Frontpartie 4. Das Kraftfahrzeug 1 ist mit einer Luftleiteinrichtung 10 ausgestattet, die im folgenden beispielhaft als Frontspoileranordnung 11 angenommen und beschrieben wird. Denkbar wäre es jedoch, die Luftleiteinrichtung 10 auch seitlich beispielsweise als Schwellerverkleidung oder im Heckbereich als Heckspoiler auszuführen.

Anhand der Fig. 1 bis 3 wird im folgenden die Luftleiteinrichtung 10 näher beschrieben. Die Luftleiteinrichtung 10 ist dem vorderen Ende 9 des Kraftfahrzeugs 1 zugeordnet und insbesondere an einer Unterseite 12 der Frontpartie 4, beispielsweise an dem unteren, entgegen der Fahrtrichtung FR verlaufenden Abschnitt 13 des Bugteils 7 angeordnet. Im Bereich des Bugteils 7 weist das Kraftfahrzeug 1 eine Fahrzeugbreite FB auf, die zwischen seitlichen Längsabschnitten 14 des Bugteils 7 gemessen wird, welche Längsabschnitte 14 über eine Basis 15 des somit U-förmigen Bugteils 7 verbunden sind.

Die Luftleiteinrichtung 10 besitzt ein Strömungsleitelement 16, welches streifenförmig sich etwa über die Fahrzeugbreite FB erstreckt und ferner bis in die seitlichen Längsabschnitte 14 herumgeführt sein kann. Unabhängig davon, ob das Strömungsleitelement 16 bis in die Längsabschnitte 14 reicht, ergibt sich für den Verlauf des Strömungsleitelements 16 eine Kontur, die der gerundeten Kontur 17 der Basis 15 des Bugteils 7 folgt. Durch die Erstreckung des Strömungsleitelements 16 bis in die Längsabschnitte 14 können gerundete Eckbereiche 18 des Strömungsleitelements 16 vorgesehen sein.

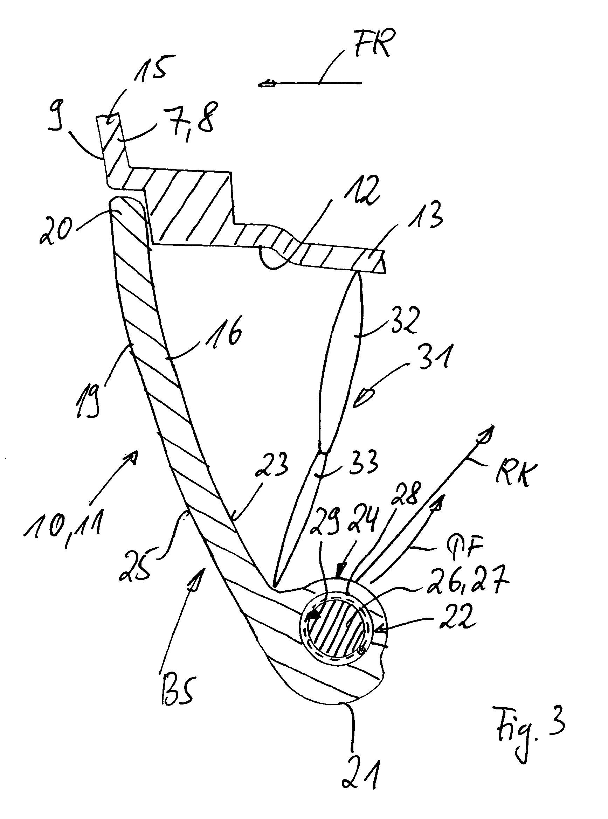

In den Fig. 1 und 3 ist das Strömungsleitelement 16 in einer ausgefahrenen Betriebsstellung BS gezeigt, in der das Strömungsleitelement 16 eine nach unten gerichtete Verlängerung 19 des Bugteils 7 darstellt, so dass in dieser Betriebsstellung BS das Strömungsleitelement 16 im Fahrbetrieb des Kraftfahrzeugs 1 je nach gewünschten Vorgaben, wie beispielsweise günstiger Luftwiderstandsbeiwert, optimierte Abtriebskräfte o. ä., dessen aerodynamische Eigenschaften beeinflusst werden. Das Strömungsleitelement 16 kann aus der dargestellten Betriebsstellung BS in Pfeilrichtung PF in eine hier nicht dargestellte beispielsweise etwa horizontale, jedenfalls eingefahrene Ruhestellung verbracht werden, in der es im wesentlichen keine die Luftströmung beeinflussende Wirkung an dem Kraftfahrzeug 1 erzielt. In der Ruhestellung kann das Strömungsleitelement 16 benachbart zur Unterseite 12 bzw. liegen bzw. mit geringem Abstand dazu.

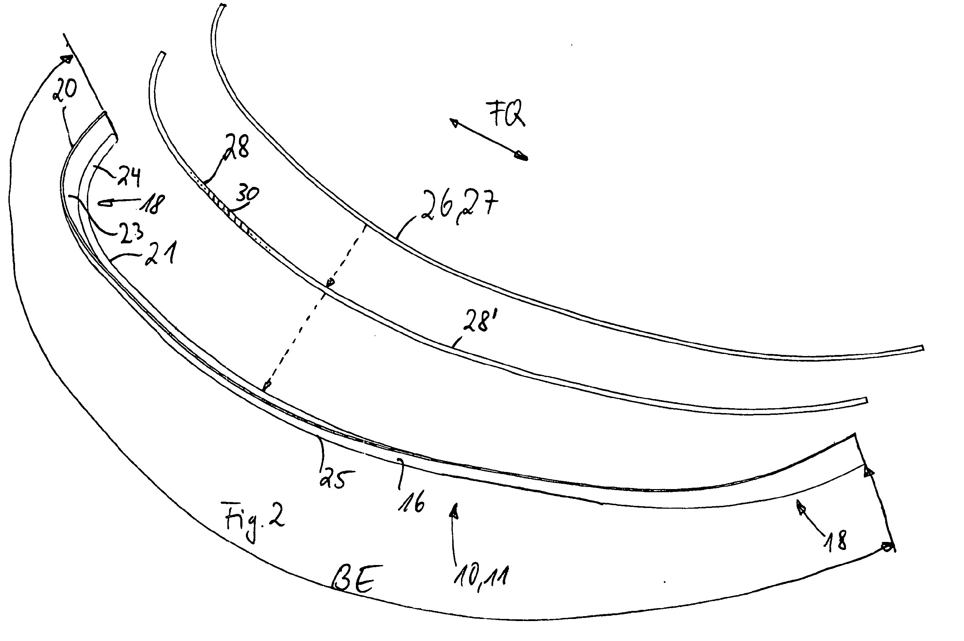

Das Strömungsleitelement 16 besitzt ein Befestigungsende 20, mit dem es mit dem Bugteil 7 verbunden ist. Dem Befestigungsende 20 gegenüberliegend weist das Strömungsleitelement 16 ein freies Ende 21 auf in dessen Bereich ein in Fig. 3 senkrecht zur Zeichnungsebene verlaufender Kanal 22 eingebracht ist, der sich etwa über die gesamte Breite BE (Fig. 2) des Strömungsleitelements 16 erstrecken kann. Insbesondere ist der Kanal 22 im Bereich des freien Endes 21 in eine an der Rückseite 23 des Strömungsleitelements 16 ausgebildeten Verdickung 24 eingebracht, so dass die die Strömungsleitfläche 25 bildende glatte Vorderseite durch den Kanal 22 nicht beeinflusst ist. Das Strömungsleitelement 16 ist aus einem elastischen und dehnbaren Material, beispielsweise Elastomer, hergestellt, und in dem Kanal 22 ist ein biegeelastisches ggf. zudem auch zugelastisches Element 26 in Fahrzeugquerrichtung FQ verschiebbar aufgenommen. Die verschiebbare Führung des biegeelastischen Elements 26 ist notwendig, da das Strömungsleitelement 16 beim Ausfahren von der Ruhestellung in die Betriebsstellung BS in Richtung seiner Breite BE gedehnt wird und bei der Zurückbewegung in die Ruhestellung sich wieder zusammenzieht. Das biegeelastische Element 26 ist insbesondere als faserverstärkter Kunststoffstab 27 ausgeführt, der in Fig. 2 zu sehen ist, wobei zumindest einige der nicht dargestellten Fasern des Stabes 27 hauptsächlich in Fahrzeugquerrichtung FQ verlaufend ausgerichtet sind.

Um die Reibung an dem in dem Strömungsleitelement 16 angeordneten biegeelastischen Element 26 beim Verschieben des Elements 26 innerhalb des Kanals 22 zu vermindern, ist in den Kanal 22 als Verschiebeführung ein Führungsmittel 28 für das Element 26 eingesetzt, welches über die den Kanal 22 begrenzende Wandung 29 übersteht und somit das biegeelastische Element 26 gegenüber der Wandung 29 abstützt, also mit Abstand zu der Wandung 29 hält. Das Führungsmittel 28 kann sich ein - oder mehrteilig über die gesamte Breite BE des Strömungsleitelements 16 erstrecken, was aus Fig. 2 hervorgeht, oder - in Fahrzeugquerrichtung FQ gesehen - lediglich abschnittweise ein oder mehrteilig vorgesehen sein. Das Führungsmittel 28 ist - um bei der Ein- und Ausfahrbewegung des Strömungsleitelements 16 folgen zu können - insbesondere bei einteiliger Ausführung über die Breite BE, biegeelastisch ausgeführt, so dass das biegeelastische Element 26 in jeder Stellung des Strömungsleitelements 16 gegenüber der Wandung 29 des Kanals 22 abgestützt wird. Das Führungsmittel 28 kann als langgestreckte Hülse 28' (Fig. 2) oder - wie durch eine Schraubenlinie 30 in Fig. 2 angedeutet - drahtartig ausgeführt und der Schraubenlinie folgend gewickelt sein. Das Führungsmittel 28 kann demnach als Schraubenfeder realisiert sein, die in den Kanal 22 so eingesetzt ist, dass sie über die Wandung 29 übersteht.

Bei der Herstellung des Strömungsleitelements 16 kann das Führungsmittel 28 mit in das Strömungsleitelement 16 eingegossen werden, so dass es die Wandung 29 des Kanals 22 durchbricht und in den Kanal 22 hineinragt und so das biegeelastische Element 26 gegenüber der Wandung 29 abstützt. Denkbar ist es jedoch auch, das Führungsmittel 28 in den bei der Herstellung des Strömungsleitelements 16 freigelassenen Kanal 22 einzusetzen, so dass es sich an die Wandung 29 anlegt, also vollständig innerhalb des Kanals 22 angeordnet ist.

Das Führungsmittel 28 kann aus einem Kunststoff mit geringem Reibwert, ggf. aus einem Gleitlagerwerkstoff, gefertigt sein. Bevorzugt wird eine Ausführungsform, bei der das drahtartige Führungsmittel 28, welches der Schraubenlinie 30 folgend gewickelt ist, aus einem Federstahldraht aufgebaut ist. Bei dieser Ausgestaltung werden bei der Ausfahrbewegung des Strömungsleitelements 16 von der Ruhestellung in die Betriebsstellung BS Rückstellkräfte RK aufgebaut, die sich zu den vom biegeelastischen Element 26 aufgebrachten Rückstellkräften RK addieren.

Für die Betätigung des Strömungsleitelements 16, also für die Ein- und Ausfahrbewegung, ist die Luftleiteinrichtung 10 mit einem hier lediglich angedeuteten Betätigungselement 31 ausgestattet, welches sich zwischen der Unterseite 12 des Bugteils 7 und der Rückseite 23 des Strömungsleitelements 16 erstreckt und insbesondere als aufblasbarer und entleerbarer Schlauch ausgebildet ist, der wenigstens eine Kammer 32 bzw. 33 aufweist, die mit einer hier nicht dargestellten Druckluftquelle in Verbindung gebracht werden kann.

## Patentansprüche

1. Luftleitelement für ein Kraftfahrzeug, mit einem Betätigungselement und einem ganz oder teilweise über die Fahrzeugbreite verlaufenden Strömungsleitelement, mit welchem Betätigungselement das Strömungsleitelement aus einer eingefahrenen Ruhestellung in eine ausgefahrene Betriebesstellung verlagerbar ist, und welches Strömungsleitelement ein elastisches und dehnbares Material umfasst sowie im Bereich seines freien Endes in einem Kanal ein in Fahrzeugquerrichtung verlaufendes, verschieblich in dem Kanal aufgenommenes biegeelastisches Element aufweist, **dadurch gekennzeichnet, dass** das biegeelastische Element (26) - in Fahrzeugquerrichtung (FQ) gesehen - wenigstens abschnittweise von zumindest einem in dem Bereich des freien Endes (21) des Strömungsleitelements (16) angeordneten Führungsmittel (28) gegenüber der den Kanal (22) begrenzenden Wandung (29) abgestützt ist.

2. Luftleiteinrichtung nach Anspruch 1, **dadurch gekennzeichnet, dass** das Führungsmittel (28) biegeelastisch ausgeführt ist.

3. Luftleiteinrichtung nach Anspruch 1 oder 2, **dadurch gekennzeichnet, dass** das Führungsmittel (28) drahtartig ausgeführt und einer Schraubenlinie (30) folgend gewickelt ist.

4. Luftleiteinrichtung nach Anspruch 1, **dadurch gekennzeichnet, dass** sich das Führungsmittel (28) - in Fahrzeugquerrichtung (FQ) gesehen - über etwa die Fahrzeugbreite (FB) des Strömungsleitelements (16) erstreckt.

5. Luftleiteinrichtung nach Anspruch 1, **dadurch gekennzeichnet, dass** das Führungsmittel (28) in den Kanal (22) eingesetzt ist und sich an dessen Wandung (29) abstützt.

6. Luftleiteinrichtung nach Anspruch 1, **dadurch gekennzeichnet, dass** das Führungsmittel (28) in das Strömungsleitelement (16) eingebracht ist, die Wandung (29) des Kanals (22) durchbricht und in den Kanal (22) hineinragt.

7. Luftleiteinrichtung nach Anspruch 1, **dadurch gekennzeichnet, dass** das biegeelastische Element (26) als Stab (27) ausgebildet ist.

8. Luftleiteinrichtung nach Anspruch 7, **dadurch gekennzeichnet, dass** der Stab (27) als faserverstärkter Kunststoffstab ausgeführt ist.

## Claims

1. An air guiding member for a motor vehicle, with an actuating member and a flow guiding member extending over all or part of the vehicle width, by means of which actuating member the flow guiding member is displaceable from a retracted rest position into an extended operating position and which flow guiding member comprises a resilient and extensible material and, in a duct in the region of its free end, has a flexible member which extends in the vehicle transverse direction and is displaceably held in the duct, **characterised in that** the flexible member (26) - seen in the vehicle transverse direction (FQ) - is at least partly supported in relation to the wall (29) bounding the duct (22) by at least one guide means (28) arranged in the region of the free end (21) of the flow guiding member (16).

2. An air guiding device according to claim 1, **characterised in that** the guide means (28) is flexibly formed.

3. An air guiding device according to claim 1 or 2, **characterised in that** the guide means (28) is formed in the manner of a wire and is wound along a helical line (30).

4. An air guiding device according to claim 1, **characterised in that** the guide means (28) - seen in the vehicle transverse direction (FQ) - extends over approximately the vehicle width (FB) of the flow guiding member (16).

5. An air guiding device according to claim 1, **characterised in that** the guide means (28) is inserted into the duct (22) and is supported against the wall (29) thereof.

6. An air guiding device according to claim 1, **characterised in that** the guide means (28) is introduced into the flow guiding member (16), breaches the wall (29) of the duct (22) and projects into the duct (22).

7. An air guiding device according to claim 1, **characterised in that** the flexible member (26) is formed as a rod (27).

8. An air guiding device according to claim 7, **characterised in that** the rod (27) is formed as a fibre-reinforced plastics rod.

## Revendications

1. Déflecteur pour véhicule automobile, avec un élément de manoeuvre et un élément déflecteur de flux d'air s'étendant totalement ou partiellement sur la largeur du véhicule, l'élément déflecteur de flux d'air étant déplaçable au moyen de l'élément de manoeuvre d'une position de repos où il est rentré à une position de service où il est sorti, et l'élément déflecteur de flux d'air comprenant un matériau élastique et extensible ainsi que, dans la zone de son extrémité libre dans un canal, un élément élastique à la flexion logé de manière à pouvoir être coulissé dans ledit canal, **caractérisé en ce que** l'élément élastique à la flexion (26) - vu dans la direction transversale (FQ) du véhicule - s'appuie au moins partiellement contre au moins un moyen de guidage (28) disposé dans la zone de l'extrémité libre (21) de l'élément déflecteur (16) relativement à la paroi (29) délimitant le canal (22).

2. Déflecteur selon la revendication 1, **caractérisé en ce que** le moyen de guidage (28) est élastique à la flexion.

3. Déflecteur selon la revendication 1 ou 2, **caractérisé en ce que** le moyen de guidage (28) est réalisé sous forme de fil et est enroulé en hélice (30).

4. Déflecteur selon la revendication 1, **caractérisé en ce que** le moyen de guidage (28) - vu dans la direction transversale (FQ) du véhicule - s'étend sur à peu près toute la largeur sur véhicule (FB) de l'élément déflecteur (16).

5. Déflecteur selon la revendication 1, **caractérisé en ce que** le moyen de guidage (28) est mis en place dans le canal (22) est s'appuie contre la paroi (29) de celui-ci.

6. Déflecteur selon la revendication 1, **caractérisé en ce que** le moyen de guidage (28) est monté dans l'élément déflecteur (16), traverse la paroi (29) du canal (22) et pénètre dans le canal (22).

7. Déflecteur selon la revendication 1, **caractérisé en ce que** l'élément élastique à la flexion (26) est réalisé sous forme de tige (27).

8. Déflecteur selon la revendication 7, **caractérisé en ce que** la tige (27) est réalisée comme tige en matière plastique renforcée de fibres.
